Europäisches Patentamt

European Patent Office

Office européen des brevets

(19)

(11) Numéro de publication: **0 1 1 5 242**
**B1**

(12) **FASCICULE DE BREVET EUROPEEN**

(45) Date de publication du fascicule du brevet:
**25.06.86**

(21) Numéro de dépôt: **83420193.1**

(22) Date de dépôt: **28.12.83**

(51) Int. Cl.⁴: **F 27 D 15/02,** F 27 B 21/02,
B 65 G 27/04, C 22 C 38/58,
F 23 H 17/12

(54) **Elément de grille en métal moulé pour échange de chaleur solide-fluide à très haute température, comportant un dispositif d'accrochage intégré à la structure de grille.**

(30) Priorité: **30.12.82 FR 8222236**

(43) Date de publication de la demande:
**08.08.84 Bulletin 84/32**

(45) Mention de la délivrance du brevet:
**25.06.86 Bulletin 86/26**

(84) Etats contractants désignés:
**BE DE GB IT**

(56) Documents cités:
**EP - A - 0 019 938
DE - B - 1 134 329
DE - C - 920 028
FR - A - 666 789
FR - A - 2 031 606
FR - A - 2 084 361
FR - A - 2 194 305
GB - A - 852 316
GB - A - 1 566 382**

(73) Titulaire: **UGINE ACIERS, 10, rue du Général Foy,
F-75008 Paris (FR)**

(72) Inventeur: **Jacquemin, Claude, Les Charmettes,
F-73400 Ugine (FR)**
Inventeur: **Provost, Florent, 20, Route d'Annecy,
F-73400 Ugine (FR)**
Inventeur: **Seinera, André, 13, avenue de la Libération,
F-73400 Ugine (FR)**

(74) Mandataire: **Pascaud, Claude et al, PECHINEY 28, rue de
Bonnel, F-69433 Lyon Cedex 3 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'élément de grille, qui fait l'objet de l'invention, concerne de la façon la plus générale les dispositifs d'échange de chaleur entre un solide à l'état divisé porté à très haute température et un fluide.

L'invention concerne aussi une méthode de préchauffage d'un fluide par échange de chaleur avec un solide divisé porté à très haute température, dans laquelle on fait tomber des grains ou particules solides sur un élément de grille à travers les orifices duquel un fluide est injecté à contre-courant. La méthode suivant l'invention s'applique, en particulier, à la réalisation des dispositifs de préchauffage de l'air qu'on introduit dans un four tournant tel qu'un four de cimenterie, afin de brûler le combustible.

Il est connu de préchauffer l'air qu'on utilise comme comburant dans les fours de cimenterie par échange de chaleur avec le clinker qui sort à l'extrémité inférieure de ces fours à une température de l'ordre de 1400°C. Ce clinker, qui se présente généralement sous forme de grains d'un diamètre moyen de l'ordre de 20 à 30 mm, tombe sur ses éléments de grille, percés de trous à travers lesquels l'air est injecté à contre-courant. Cet air s'échauffe au contact des grains de clinker et est ainsi porté à une température de l'ordre de 1200 à 1400°C. Ces éléments de grilles sont fixes ou mobiles. Chaque élément mobile est solidarisé par un dispositif d'accrochage avec un moyen mécanique d'entraînement qui lui transmet un mouvement alternatif qui provoque un déplacement progressif de la couche de clinker le long de sa surface. Ainsi, le clinker passe d'un élément de grille à l'autre le long d'un couloir d'évacuation en se refroidissant progressivement. A l'extrémité du couloir, le clinker, suffisamment refroidi par le courant d'air, est évacué vers les moyens de broyage.

Les figures ci-après permettront de mieux comprendre les caractéristiques d'un dispositif d'accrochage utilisé pour un élément de grille de conception classique pour échange de chaleur entre un solide divisé et un fluide et celles d'un dispositif d'accrochage intégré à la structure de grille d'un élément de grille suivant l'invention:

Figure 1: vue en plan suivant B (fig. 3) de la face inférieure d'un élément de grille de type connu.

Figure 2: pièce de liaison en T assurant la fixation de l'élément de grille sur son support.

Figure 3: vue en coupe suivant AA de l'élément de grille de la figure 1, la pièce de liaison de la figure 2 étant représentée en position d'accrochage.

Figure 4: vue en plan suivant D (fig. 5) de la face inférieure d'un élément de grille suivant l'invention.

Figure 5: vue en coupe suivant CC de l'élément de grille suivant l'invention de la figure 4, la pièce de liaison de la figure 2 étant représentée en position d'accrochage.

Figure 6: vue en plan suivant G (fig. 7) de la face supérieure d'un élément de grille suivant l'invention.

Figure 7: vue en coupe suivant EE de l'élément de grille nervuré suivant l'invention de la figure 6, la pièce de liaison de la figure 2 étant représentée en position d'accrochage.

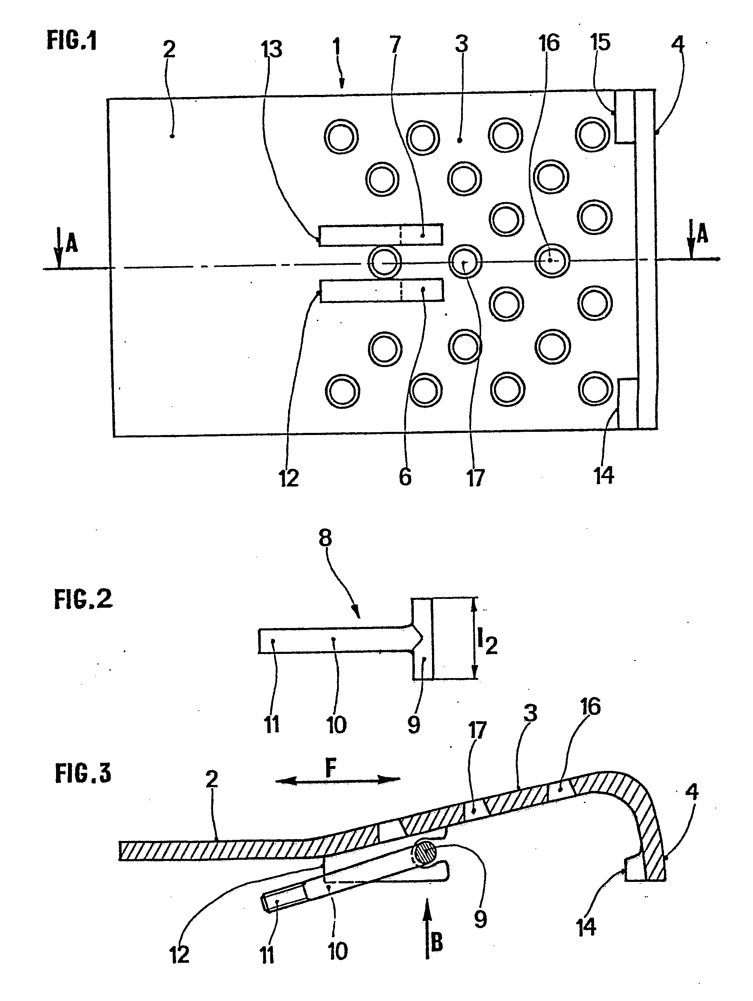

Les figures 1, 2 et 3 représentent de façon schématique un élément de grille (1) de type connu, pour la réception des grains de clinker provenant d'un four de cimenterie, ainsi qu'une pièce de liaison permettant de le relier à un support. Cet élément est constitué d'une plaque en acier réfractaire moulé qui comporte une zone (2) sensiblement horizontale sur laquelle est destinée à reposer l'extrémité frontale de la plaque précédente, et une zone (3) inclinée et percée de trous, qui est limitée par une partie frontale (47. Cet élément de grille repose sur un support fixe ou mobile. Dans le cas d'un support mobile, l'élément de grille est animé d'un mouvement de va et vient suivant la double flèche (F) qui a pour effet de favoriser le glissement du clinker depuis la zone (2) de l'élément de grille, jusqu'à la partie frontale (4) qui le pousse grâce à son mouvement de va et vient sur la grille suivante qui est généralement fixe.

L'élément de grille comporte, à sa partie inférieure, disposé en saillie au-dessous de la grille, un moyen d'accrochage constitué par un double crochet (6, 7) qui permet de fixer l'élément de grille à un support par l'intermédiaire d'une tige de liaison en T (8) dont le bras transversal (9) s'engage par ses extrémités dans les crochets (6, 7) comme le montre la figure 3, tandis que la jambe (10) est solidarisée avec le support par son extrémité filetée (11). La traction ainsi exercée par la jambe (10) applique fortement l'élément de grille (1) contre son support par l'intermédiaire des zones d'appui (12, 13, 14 et 15), les deux premières étant ménagées en arrière des crochets et les deux dernières sur les bords latéraux de la partie frontale (4).

La grille comporte, enfin, un ensemble de trous tels que (16, 17) à travers lesquels de l'air est injecté sous relativement forte pression, de bas en haut. Les trous sont, en général, coniques avec un petit diamètre de l'ordre de 10 mm à l'extrémité supérieure. Il se forme sur l'élément de grille mobile une sorte de lit de clinker d'épaisseur variable, en général de l'ordre de 200 à 300 mm, qui est sans cesse poussé par l'action coordonnée d'un ensemble d'éléments de grille, alternativement mobiles et fixes, disposés les uns à la suite des autres depuis l'orifice de sortie du four jusqu'à la zone d'évacuation. Pendant ce parcours, la température du clinker s'abaisse progressivement de environ 1400°C jusqu'au niveau de température désiré, en général inférieur à 500°C.

L'expérience a montré que les éléments de grille mobiles qui viennent d'être décrits, et aussi les éléments de grille fixes, ont, dans la zone la plus chaude, une durée de vie très courte de l'ordre de 3 à 12 mois. En effet, malgré l'injection d'air froid, ils sont portés, à la surface supérieure qui est en contact direct avec le clinker, à une température de 1000°C, et même davantage. De plus, les grains de clinker sont très abrasifs vis-à-vis de l'acier dans ce domaine de température et, donc, provoquent sans cesse une abrasion de la surface du métal avec laquelle ils sont en contact. En même temps, le courant d'air qui a été porté à haute température par passage à travers le clinker, oxyde directement cette face supérieure de l'élément de grille. Il se produit donc, de façon simultanée, une abrasion ou érosion et une oxydation de la face supérieure de l'élément de grille.

Pour ralentir ce phénomène d'oxydation-érosion, on utilise de façon connue des aciers réfractaires de moulage, tels que par exemple l'acier suivant norme AFNOR Z 40 CN 25-20. Malgré la forte teneur en Cr d'un tel acier, la couche d'oxyde protectrice est sans cesse érodée par le frottement des grains de clinker sur la paroi supérieure de l'élément de grille. De plus, malgré le refroidissement intense de la paroi inférieure de cet élément de grille par le courant d'air à température relativement basse, la paroi supérieure est portée à une température de l'ordre de 1000°C en marche normale par le contact sans cesse renouvelé avec les grains de clinker qui tombent de l'orifice de sortie du four et se trouvent donc à une température initiale de 1400°C ou plus.

On constate en particulier que, au voisinage du moyen d'accrochage qui a été décrit plus haut, un attaque préférentielle de l'alliage se produit aux joints de grains. En effet, du fait du volume relativement important des crochets (6 et 7), il est nécessaire de disposer des masselottes d'alimentation au voisinage de cette zone d'accrochage au moment de la coulée de l'acier. Il en résulte un refroidissement beaucoup plus lent qui entraîne un grossissement important du grain. Par ailleurs, cette zone d'accrochage, qui est en quelque sorte plaquée contre l'élément de grille, constitue un point faible dans la structure de celui-ci.

Dans certains cas, les efforts de traction résultant des contraintes mécaniques et thermiques exercées par le bras transversal (9) de la pièce de liaison (8) sur les crochets (6 et 7) peuvent causer des ruptures. Pour éviter celles-ci, on est conduit à renforcer les épaisseurs des pièces et, donc, le poids des éléments de grille, ce qui est défavorable du point de vue de la grosseur du grain et aussi du point de vue de l'entraînement mécanique des éléments de grille mobiles suivant un mouvement de va et vient.

On a donc recherché la possibilité de supprimer les chrochets disposés en saillie au-dessous de la grille et d'intégrer le moyen d'accrochage à la grille elle-même. On a recherché également la possibilité de pourvoir mettre en place la pièce de liaison en T (8) à partir de la surface supérieure d'un élément de grille, le bras transversal (9), qui constitue la tête de cette pièce de liaison, reposant sur la surface supérieure de la grille sans être exposé cependant au rayonnement direct des grains de clinker portés à très haute température.

L'élément de grille fixe ou mobile pour échangeur de chaleur entre un solide divisé porté à très haute température et un fluide à température inférieure, qui fait l'objet de l'invention, permet de résoudre l'ensemble de ces difficultés. Il est constitué par une plaque en acier réfractaire dont la face supérieure reçoit les grains ou particules de ce solide, cette plaque comportant un ensemble de trous qui sont traversés de bas en haut par le fluide, cette plaque comportant aussi selon l'invention une zone en creux dont le fond comporte un trou dans lequel est engagée la jambe d'une pièce de liaison servant à fixer l'élément de grille à un support, la tête de cette pièce étant retenue à l'intérieur de cette zone en creux en appui sur les bords du trou, et la profondeur de cette zone en creux étant supérieure à la hauteur de la tête de la pièce de liaison qu'elle contient. De préférence, la profondeur de la zone en creuc est d'environ 2 à 6 fois l'épaisseur moyenne de la plaque en acier réfractaire. De préférence également, la face supérieure de la plaque comporte des reliefs tels que des nervures qui s'entrecroisent en formant des cellules. De préférence, enfin, l'élément de grille est constitué par un acier moulé ayant la composition suivante en % en masse:

| C  | 0,30 | à | 0,70 |
|----|------|---|------|
| Cr | 24   | à | 29   |
| Ni | 11   | à | 15   |
| Mn | 7    | à | 11   |
| Si | 1    | à | 2    |

Reste Fe et impurités diverses.

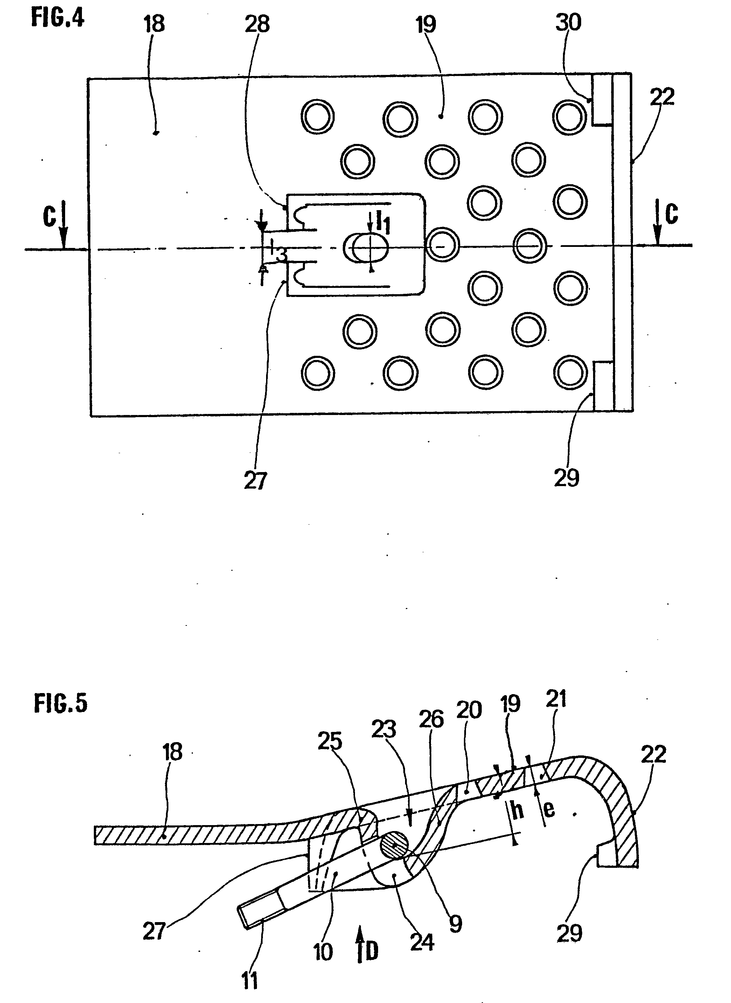

On voit figures 4 et 5 un premier mode de réalisation de l'élément de grille comportant le dispositif d'accrochage suivant l'invention. Cet élément de grille comporte, comme l'élément de grille connu représenté aux figures 1 et 3, une zone (18) sensiblement horizontale et une zone (19) inclinée et percée de trous tels que (20, 21) dont l'extrémité constitue la partie frontale (22) de l'élément de grille. Le moyen d'accrochage de la gruppe à son support est ici constitué par une zone en creux qui forme une sorte de cuvette (23) dont les parois sont constituées par la plaque en acier réfractaire elle-même, qui épouse la forme de cette zone en creux. Un trou (24) est ménagé dans le fond de cette zone en creux de façon à permettre le passage de la jambe (10) de la pièce de liaison (8) et à permettre aussi de donner à cette jambe l'angle voulu par rapaport à l'horizontale pour pourvoir la relier de façon connue au support d'élément de grille avec lequel elle peut être solidarisée par son extrêmité filetée (11). Ce support connu n'est pas représenté.

Les dimensions du trou (24) sont déterminées de façon à présenter une section de passage bien supérieure à la section de la jambe (10), par exemple le double, de façon à permettre le passage de bas en haut d'un courant d'air de refroidissement permettant d'abaisser la température de la tête de cette pièce de liaison constituée par le bras transversal (9). La largeur $l_1$ de ce trou mesurée parallèlement à l'axe du bras (9) est déterminée de façon à permettre un passage facile de la jambe (10) tout en demeurant bien inférieure à la largeur «$l_2$» du bras (9), de façon que celui-ci s'appuie solidement dans le fond de la zone en creux (23) sur le bord du trou (24).

La largeur du fond de cette zone en creux (23), mesurée parallèlement à l'axe du bras (9), est au moins égale à $l_2$. Sa profondeur «h» est déterminée de façon que la tête de la pièce de liaison constituée par le bras (9) se trouve à un niveau sensiblement égal à celui auquel ce bras se serait trouvé s'il avait été engagé dans les chrochets (6) et (7) du moyen d'accrochage connu. De toutes façons, la profondeur «h» de la zone en creux doit être supérieure à la hauteur de la tête de la pièce de liaison contenue dans cette zone en creux. On donne aux parois latérales telles que (25) (26) une pente relativement forte de façon à permettre, au cours de l'utilisation de l'élément de grille suivant l'invention, l'établissement d'une couche pratiquement fixe de grains solides tels que des grains de clinker à l'intérieur de cette cuvette. Cette couche est refroidie par le passage de l'air à travers le trou (24) et permet ainsi de protéger le bras (9) contre un échauffement exagéré qui abaisserait sa résistance mécanique au-dessous du niveau nécessaire.

Dans la pratique, la profondeur «h» de la cuvette mesurée par rapport au plan de la face supérieure de la zone inclinée (19) est de l'ordre de 2 à 6 fois l'épaisseur moyenne (e) de la plaque dans la zone inclinée (19). L'épaisseur des parois de la cuvette est voisine de «e».

L'élément de grille suivant l'invention comporte, par ailleurs, comme l'élément de grille connu, des zones d'appui (27, 28, 29 et 30) qui jouent le même rôle que les zones d'appui (12, 13, 14 et 15) de l'élément de grille connu. On remarque que, entre les zones (27) et (28), comme entre les zones (12) et (13), un espace de largeur $l_3$ est réservé pour le passage de la jambe (10) de la pièce de liaison (8). Le bras transversal (9), qui constitue la tête de la pièce de liaison, peut être remplacé par une tête de forme différente adaptée aux dimensions de la cuvette. Cette tête doit avoir une section telle qu'elle ne puisse pas franchir le trou (24) et qu'elle présente une surface d'appui suffisante sur les bords du trou (24).

L'élément de grille ainsi conçu est réalisé par moulage sans qu'il soit nécessaire de disposer une ou plusieurs masselottes au voisinage de la zone d'accrochage de la pièce de liaison. En effet, les parois de la zone en creux ou cuvette (23) sont constituées par les parois mêmes de la grille simplement formées en creux et on comprend que l'alimentation en métal liquide des parois de cette cuvette ne présente pas de difficultés particulières. Quant aux deux parties en relief, qui comportent les surfaces d'appui (27), leur volume est suffisamment limité pour que leur alimentation en métal liquide ne présente pas non plus de problème particulier. On obtient donc, en tous points de l'élément de grille, une structure de coulée à grains fins, qui présente une résistance accrue à l'oxydation à haute température. Par ailleurs, les efforts de traction exercés sur l'élément de grille par la tête de la pièce de liaison (8) constituée par le bras (9) s'appliquent directement sur le fond de la cuvette autour du trou (24), et ce fond de cuvette fait partie intégrante de la grille. Il n'y a donc plus de risque de rupture de la grille au niveau de la zone d'accrochage. Enfin, la couche de clinker, qui séjourne dans la cuvette (23) et qui est constamment refroidie par le courant d'air qui pénètre par le trou (24), protège la tête de la pièce de liaison (8) constituée par les bras transversal (9) et limite considérablement son échauffement. En effet, la profondeur de la cuvette étant supérieure à la hauteur de la tête de la pièce de liaison, celle-ci est recouverte d'une couche de clinker pratiquement immobilisée.

L'élément de grille suivant l'invention a donc une durée de vie accrue et une masse réduite grâce à une structure plus compacte.

Il est possible d'améliorer encore les performances de l'élément de grille suivant l'invention en appliquant à cet élément de grille les perfectionnements décrits et revendiqués dans la demande de brevet français FR-A-2 527 759 déposée le 26 Mai 1982. Suivant l'un des enseignements de cette demande, on réalise sur la face supérieure d'un élément de grille fixe ou mobile pour échange de chaleur solide-gaz à très haute température, des reliefs disposés sur le parcours des grains ou particules solides portés à haute température, de façon à faire obstacle à l'écoulement de la fraction de ces grains ou particules qui se trouve au contact de cette face supérieure ou à son voisinage immédiat.

On peut, en particulier, réaliser, dans la zone percée de trous de l'élément de grille, des nervures qui délimitent des cellules à l'intérieur desquelles se trouvent un ou plusieurs trous laissant passer l'air de refroidissement. Grâce à l'existence de ces nervures, les grains ou particules solides, qui se trouvent au contact du fond de chaque cellule, ou au voisinage immédiat de ce fond, sont retenus à l'intérieur de ces cellules, ou tout au moins freinés dans leur déplacement. Dans ces conditions, le courant d'air injecté à travers les trous, même s'il entraîne un certain nombre de grains ou particules à l'extérieur de la cellule, refroidit une couche de grains ou particules semi-statique dont la température est considérablement abaissée.

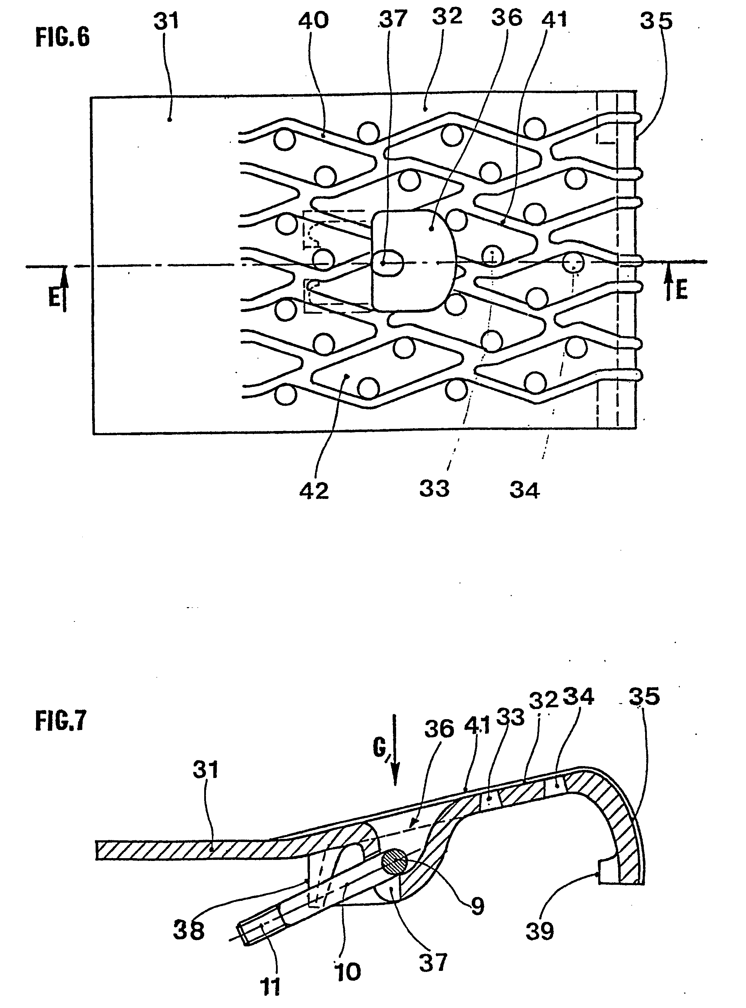

On voit figures 6 et 7 un élément de grille suivant la présente invention comportant une zone (31) sensiblement horizontale et une zone inclinée (32) percée de trous tels que (33, 34). Cette zone inclinée est limitée à l'avant par la partie frontale (35). Cet élément de grille comporte une zone en creux ou cuvette (36) dont le fond est percé d'un trou (37) à travers lequel, comme on le voit figure 7, passe la jambe (10) d'une pièce de liaison dont la tête, constituée par les bras transversal (9), est retenue à l'intérieur de la cuvette (36). Cet élément de grille comporte, comme celui représenté aux figures 4 et 5, des zones d'appui telles que (38) et (39) qui sont appuyées contre un support non représenté, par la mise en tension de la tige de liaison (8) qui est solidarisée avec le support par son extrémité filetée (11). La face supérieure de la zone inclinée (32) présente un ensemble de nervures telles que (40, 41) qui s'entrecroisent de façon à former des cellules telles que (42) à l'intérieur desquelles sont répartis les trous tels que (33, 34) que traverse l'air de refroidissement. La hauteur de ces nervures est déterminée de façon à faire obstacle, dans les conditions d'utilisation, au déplacement des grains solides qui se trouvent au voisinage immédiat de la paroi, ou au moins à freiner ce déplacement.

Dans le cas des figures 6 et 7, la hauteur moyenne de ces nervures est d'environ 5 mm pour une épaisseur moyenne qui est également de l'ordre de 5 mm. L'épaisseur moyenne de paroi de l'élément de grille dans la zone inclinée (32) est d'environ 10 mm. Le déplacement moins rapide des grains solides au contact de la paroi, grâce à la présence des nervures, favorise à la fois un abaissement de la température de cette paroi et une plus faible érosion par frottement. Il en résulte une bien meilleure tenue mécanique, qui permet de réduire sensiblement l'épaisseur sans réduire la durée de vie.

La zone en creux, ou cuvette (36) se comporte également à la façon d'une cellule telle que (42), mais sa profondeur, beaucoup plus importante, permet l'établissement d'une couche relativement épaisse de grains stables, qui protège efficacement le bras (9) de la tige de liaison et permet, grâce à l'arrivée d'air de refroidissement par le trou (37), le maintien de ce bras (9) à une température bien inférieure à la température moyenne de l'élément de grille. Il résulte de ceci une grande sécurité de fonctionnement, les risques de rupture étant pratiquement éliminés. En même temps, l'abaissement de la température moyenne de l'élément de grille réduit les risques de déformation par fluage et ralentit l'oxydation. Enfin, la stabilisation au moins partielle de la couche de grains solides en contact avec la paroi métallique ralentit de façon très importante le processus d'oxydation-érosion.

Afin d'améliorer encore les performances de l'élément de grille suivant l'invention, on utilise avantageusement pour sa réalisation l'acier réfractaire de moulage dont la composition est décrite et revendiquée dans la demande de brevet français FR-A-2 527 759. Cet acier contient en % en masse:

| C | 0,30 à 0,70 |
|---|---|
| Cr | 24 à 29 |
| Ni | 11 à 15 |
| Mn | 7 à 11 |
| Si | 1 à 2 |
| Reste | Fe et impuretés diverses. |

A l'intérieur de ce domaine, on utilise préférentiellement la composition suivante en % en masse:

| C | | 0,40 à 0,60 |
|---|---|---|
| Cr | | 25 à 27 |
| Ni | | 12 à 14 |
| Mn | | 8 à 10 |
| Si | | 1,3 à 1,8 |
| Al | $\leqslant$ | 0,20 |
| S | $\leqslant$ | 0,05 |
| P | $\leqslant$ | 0,10 |
| N | $\leqslant$ | 0,20 |
| Reste | Fe | |
| et autres impuretés inévitables. | | |

L'expérience a montré que les grilles réalisées par moulage au moyen de cet acier résistent particulièrement bien aux atmosphères contenant des oxydes de soufre et supportent des maintiens de très longue durée dans tout le domaine de températures compris entre 750 et 110°C.

Enfin, les risques de fragilisation par la formation de phase sigma dans les zones situées dans le domaine de températures compris entre 750 et 850°C sont minimisés.

De très nombreuses variantes de réalisation peuvent être apportées à l'élément de grille suivant l'invention. En particulier, la forme et les dimensions de la zone en creux ou cuvette dans laquelle est engagée la tête de la tige de liaison (8) peuvent varier dans de larges limites. De même, la pièce de liaison (8) peut être réalisée de nombreuses façons différentes. On peut, en particulier, au lieu d'utiliser comme tête de cette pièce de liaison un bras transversal (9), utiliser une tête de forme quelconque dont les dimensions sont telles qu'elle ne peut pas passer à travers le trou du fond de la zone en creux dans lequel est engagée la jambe (10). On peut, plus particulièrement, adapter la tête de la pièce de liaison à la forme du fond de la zone en creux de façon à réaliser un appui stable et à répartir les pressions. De même, la jambe peut présenter une section et un profil de formes très variables suivant le mode de liaison de cette jambe au support. Il suffit que la jambe puisse traverser le trou situé au fond de la zone en creux sans difficultés et s'orienter de la façon voulue pour pouvoir se raccorder au support par son extrémité.

La solidarisation de l'extrémité de la jambe avec le support peut être réalisée par filetage et écrou ou par tout autre moyen connu de l'homme de l'art.

Enfin, le trou situé au fond de la zone en creux doit avoir une section de passage suffisante pour permettre le passage du fluide de refroidissement malgré la présence de la jambe qui le traverse.

On peut envisager de réaliser un ou plusieurs autres trous dans les parois de la zone en creux pour accroître la circulation de ce fluide. On peut aussi, éventuellement, réaliser des éléments de grille suivant l'invention, comportant plusieurs pièces de liaison logées dans une ou plusieurs zones en creux.

## Revendications

1. Elément de grille fixe ou mobile pour échangeur de chaleur entre un solide divisé porté à très haute température et un fluide à température inférieure, relié à un support par une pièce de liaison comportant une jambe et une tête et constitué d'une plaque en acier réfractaire moulé dont la face supérieure reçoit les grains ou particules de ce solide, qui se déplacent le long de cette face, cette plaque comportant un ensemble de trous qui sont traversés de bas en haut par le fluide, caractérisé en ce que la plaque (18, 31) comporte une zone en creux (23, 26), dont le fond comporte un trou (24, 37) dans lequel est engagée la jambe (10) de la pièce de liaison, la tête (9) de cette pièce de liaison étant retenue à l'intérieur de la zone en creux (23, 36) en appui sur les bords du trou et la profondeur de cette zone en creux étant supérieure à la hauteur de la tête (9) de la pièce de liaison qu'elle contient.

2. Elément de grille selon la revendication 1, caractérisé en ce que la profondeur (h) de la zone en creux (23,36) est d'environ 2 à 6 fois l'épaisseur moyenne (e) de la plaque (18, 31) en acier réfractaire.

3. Elément de grille selon l'une quelconque des revendications 1 ou 2, caractérisé en ce que l'extrémité (11) de la jambe (10) de la pièce de liaison opposée à la tête (9) comporte un moyen de fixation au support constitué par exemple par un filetage.

4. Elément de grille selon l'une quelconque des revendications 1 à 3, caractérisé en ce que la face supérieure (32) de la plaque (31) présente des nervures (40, 41) qui s'entrecroisent en formant des cellules (42) à l'intérieur desquelles se trouvent un ou plusieurs trous (33,34) laissant passer le fluide de refroidissement.

5. Elément de grille selon l'une quelconque des revendications 1 à 4, caractérisé en ce qu'il est constitué d'un acier moulé ayant la composition suivante (% en masse):

| C | 0,30 | à | 0,70 |
|---|---|---|---|
| Cr | 24 | à 29 | |
| Ni | 11 | à 15 | |
| Mn | 7 | à 11 | |
| Si | 1 | à 2 | |

Reste : Fe et impurités diverses.

## Claims

1. A fixed or movable grill element for heat exchange between a divided solid at very high temperature and a fluid at lower temperature, fixed to a support by a connecting member comprising a leg and a head and comprising a plate of cast refractory steel, the upper face of which receives the grains or particles of said solid, which are displaced along said face, said plate comprising an array of holes through which the fluid passes in an upward direction, characterised in that the upper face of the plate (19, 32) comprises one recessed region (23, 36), the bottom of which comprises at least one hole (24, 37) in which the leg (10) of the connecting member is engaged, the head (9) of said connecting member being retained within said recessed region (23, 36), in a position of bearing against the edge portions of the hole and the depth of said recessed region being greater than the height of the head (9) of the connecting member that it contains.

2. A grill element according to claim 1 characterised in that the depth of the recessed region is about 2 to 6 times the mean thickness of the refractory steel plate.

3. A grill element according to claim 1 or claim 2, characterised in that the end portion (11) of the leg (10) of the connecting member, which is remote from the head (9), comprises a means for fixing same to a support, formed for example by a screwthread.

4. A grill element according to one of claims 1 to 3, characterised in that the upper face (32) of the plate comprises ribs (40, 41) which intersect, forming cells (42) within which are disposed holes (33, 34) permitting the cooling fluid to pass therethrough.

5. A grill element according to one of claims 1 to 5, characterised in that it comprises a cast steel which is of the following composition in percent by weight:

| C | 0.30 to 0.70 |
|---|---|
| Cr | 24 to 29 |
| Ni | 11 to 15 |
| Mn | 7 to 11 |
| Si | 1 to 2 |
| Balance | Fe and various impurities. |

## Patentansprüche

1. Festes oder bewegliches Rostelement für einen Wärmeaustauscher zwischen einem unterteilten, auf sehr hohe Temperatur gebrachten Feststoff und einem Fluid auf niedrigerer Temperatur, das mit einem Träger durch ein einen Fuss und einen Kopf aufweisendes Verbindungsstück verbunden ist und aus einer feuerfesten Gussstahlplatte besteht, deren Oberseite die Körner oder Teilchen dieses Feststoffes aufnimmt, die sich längs dieser Seite bewegen, welche Platte eine Gruppe von Bohrungen aufweist, die von unten nach oben vom Fluid durchströmt werden, dadurch gekennzeichnet, dass die Platte (18, 31) eine vertiefte Zone (23, 26) aufweist, deren Boden eine Bohrung (24, 37) aufweist, in die der Fuss (10) des Verbindungsstücks eingreift, wobei der Kopf (9) dieses Verbindungsstücks im Inneren der vertieften Zone (23, 26) in Anlage an den Rändern der Bohrung festgehalten wird und die Tiefe dieser vertieften Zone grösser als die Höhe des Kopfes (9) des Verbindungsstücks ist, den sie enthält.

2. Rostelement nach Anspruch 1, dadurch gekennzeichnet, dass die Tiefe (h) der vertieften Zone (23, 26) etwa die zwei- bis sechsfache Dicke (e) der feuerfesten Stahlplatte (18, 31) beträgt.

3. Rostelement nach irgendeinem der Ansprüche 1 oder 2, dadurch gekennzeichnet, dass das dem Kopf (9) entgegengesetzte Ende (11) des Fusses (10) des Verbindungsstücks ein Mittel zur Befestigung am Träger aufweist, das zum Beispiel aus einem Gewinde besteht.

4. Rostelement nach irgendeinem der Ansprüche 1 bis 3, dadurch gekennzeichnet, dass die Oberseite (32) der Platte (31) Rippen (40, 41) aufweist, die sich unter Bildung von Zellen (42) kreuzen, in deren Innerem sich eine oder mehrere Bohrungen (33, 34) befinden, die das Kühlfluid durchströmen lassen.

5. Rostelement nach irgendeinem der Ansprüche 1 bis 4, dadurch gekennzeichnet, dass es aus einem Gussstahl mit der folgenden Zusammensetzung (Gewichtsprozent) besteht:

| C | 0,30 bis | 0,70 |
|---|---|---|
| Cr | 24 | bis 29 |
| Ni | 11 | bis 15 |
| Mn | 7 | bis 11 |
| Si | 1 | bis 2 |

Rest: Fe und verschiedene Verunreinigungen.

**FIG.1**

**FIG.2**

**FIG.3**

**FIG.4**

**FIG.5**

**FIG.6**

31  40  37  32  36  41  35

E  E

42  33  34

**FIG.7**

G

36  41  33  32  34  35

31

38  11  10  37  9  39